**Europäisches Patentamt**

**European Patent Office**

**Office européen des brevets**

(19)

(11) Veröffentlichungsnummer : **0 013 552**
**B1**

(12) ## EUROPÄISCHE PATENTSCHRIFT

(45) Veröffentlichungstag der Patentschrift :
01.09.82

(51) Int. Cl.³ : **B 29 B   5/06, A 22 C  11/02**

(21) Anmeldenummer : 80100009.2

(22) Anmeldetag : 03.01.80

(54) Verfahren und Anordnung zum Portionieren einer plastisch verformbaren Masse, insbesondere Wurstmasse.

(30) Priorität : 09.01.79 DE 2900585

(43) Veröffentlichungstag der Anmeldung :
23.07.80 (Patentblatt 80/15)

(45) Bekanntmachung des Hinweises auf die Patenterteilung : 01.09.82 Patentblatt 82/35

(84) Benannte Vertragsstaaten :
AT CH DE FR GB IT

(56) Entgegenhaltungen :
CH A 442 125
DE A 2 249 070
DE B 1 290 070
FR A 2 075 481
US A 3 207 368

(73) Patentinhaber : ALBERT HANDTMANN GMBH & CO.
Birkenallee 25-29
D-7950 Biberach 1 (DE)

(72) Erfinder : Staudenrausch, Georg
Rosenstrasse 14
D-7950 Biberach 18-Rissegg (DE)

(74) Vertreter : Jakob, Peter H. et al
Patentanwälte A.Grünecker, H. Kinkeldey W.
Stockmair, K. Schumann, P.H. Jakob G.Bezold Maximilianstrasse 43
D-8000 München 22 (DE)

Imprimerie Jouve, 18, rue St-Denis, 75001 Paris, France

## Verfahren und Anordnung zum Portionieren einer plastich verformbaren Masse, insbesondere Wurstmasse

Die Erfindung betrifft ein Verfahren zum Portionieren einer plastich verformbaren Masse, insbesondere Wurstmasse, bei dem man die einzelnen Portionen nach einem eingestellten Sollwert schrittweise ausstößt und die Ausstoßbewegung laufend mißt, wobei nach jedem Ausstoßvorgang ein Nachlauf auftritt.

Ein derartiges Verfahren ist beispielsweise Gegenstand der DE-C 20 02 100. Dort ist eine hydraulisch betriebene Wurstfüll- und Abdrehmaschine gezeigt, deren Hydromotor durch ein Rotations-Servo-Ventil gesteuert wird. Dabei wird das Servo-Ventil taktweise durch einen Steuermotor vorgestellt, und der Hydromotor kopiert die vorgegebene Steuerstrecke nach. Da der Drehwinkel des Hydromotors dem Volumen der ausgestoßenen Masse proportional ist, ergibt sich große Gewichtsgenauigkeit. Wegen des dort angewandten Kopierverfahrens kann diese Ausführung nur mit einem hydraulischen Antrieb und relativ hohem Steuerungsaufwand realisiert werden.

Überall dort, wo der Portioniervorgang durch Steuerkommandos eingeleitet und beendet wird, ist die volumenmäßige Abfüllgenauigkeit maßgeblich bestimmt durch den Nachlaufvorgang, d.h. die Füllmenge, die zwischen Abschaltkommando und Stillstand des Portionierelementes noch eingefüllt wird. Die Größe dieser Nachlaufmenge ist von verschiedenen Faktoren abhängig, vor allem von der Taktzahl bzw. Abfüllgeschwindigkeit, aber auch von der Art und Ausbildung des jeweiligen Förderwerkes, der Arbeitstemperatur, Verschmutzung, Verschleiß der Antriebsteile und dergleichen. Vor allem dann, wenn die Dosierung durch die Bemessung einer Zeitspanne zwischen Ein- und Ausschaltkommando erfolgt, müssen zwischenzeitig immer wieder Kontrollmessungen durchegeführt und die Einstellungen korrigiert werden, wenn hinreichende Portioniergenauigkeit erzielt werden soll. Stets bleibt jedoch der eingestellte Steuerwert für eine Weile konstant. Ändern sich in der Zwischenzeit die Betriebsbedingungen, so bleiben die dadurch bedingten Abweichungen beim Abfüllvorgang bis zur nächsten Kontrolle und Änderung des Steuerwertes erhalten.

In der US-PS 3 207 368 ist eine Portioniervorrichtung beschrieben und dargestellt, bei der eine Pumpe für Wurstmasse durch einen hydraulischen Antriebsmotor angetrieben wird. An der Pumpenwelle ist eine Lochscheibe befestigt, die die Rotation der Pumpenwelle erfaßt und mit einem Impulszähler verbunden ist. Hinter der Pumpe sitzt ein Absperrventil mit Kolbenschieber, der pneumatisch gesteuert wird durch ein elektromagnetisches Steuerventil, das seinerseits durch einen zweiten Impulszähler gesteuert wird. Zur Steuerung eines Hydromotors für die Wurstmassenpumpe ist ein elektromagnetisch betätigtes 4-Wege-Ventil vorgesehen, das ebenfalls durch den zweiten Impulsgeber gesteuert wird.

Beim Einschalten des Hydromotors, der die Wurstmassenpumpe antreibt, wird die Wurstmasse durch das geöffnete Absperrventil ausgeschoben. Während der Rotation der Pumpenwelle zählt der Impulszähler die Wellenumdrehungen; wenn eine vorgewählte Umdrehungszahl erreicht ist, werden Zählerrelaiskontakte geschlossen, wodurch gleichzeitig das Absperrventil geschlossen und die Druckölzuführung zu dem Hydromotor für die Wurstmassenpumpe unterbrochen wird.

Gegenstand der DE-A 22 49 070 ist eine Wurstfüllvorrichtung mit zwei Führungsrollen für die Würste, von denen eine mit einem Impulsgeber verbunden ist, der einen mit einer Sollwert-Einstellvorrichtung versehenen Impulsgeber steuert. Bei dieser Wurstfüllvorrichtung wird die Länge der hergestellten Würste gemessen und der Ausstoßvorgang unterbrochen und eine Abdrehvorrichtung in Gang gesetzt, sobald der Istwert für die Länge den vorgegebenen Sollwert erreicht hat.

Weder in der US-PS 3 207 368 noch in der DE-A 22 49 070 wird der auftretende Nachlauf berücksichtigt oder gar zu kompensieren versucht.

Der Erfindung liegt die Aufgabe zugrunde, ein Verfahren der eingangs beschriebenen Gattung und eine hierzu geeignete Vorrichtung anzugeben, bei denen auch bei grosser Portioniergeschwindigkeit und hoher Taktzahl Abweichungen von einer vorgegebenen Portionsgröße unverzüglich ausgeglichen werden.

Bei einem Verfahren der eingangs erläuterten Gattung wird diese Aufgabe erfindungsgemäß dadurch gelöst, daß man

a) nach Beendigung der Ausstoßbewegung den diesem folgenden Nachlauf mißt,

b) für den darauffolgenden Ausstoßvorgang die Differenz zwischen dem Sollwert und diesem Nachlauf bildet,

c) die Ausstoßbewegung abschaltet, sobald diese Differenz erreicht ist.

Dieses Verfahren zur Kompensation des Nachlaufes kann nach jedem Ausstoßschritt erfolgen, so daß jeweils nur eine Messung u. ein Vergleich erforderlich sind, wobei die Differenz unmittelbar die folgende Ausstoßbewegung beeinflußt, eine Zwischenspeicherung also nicht erforderlich ist. Vielfach genügt es jedoch auch, das Verfahren in Intervallen durchzuführen, wobei man zwischenzeitlich an einzelnen Portionen Abweichungen in Kauf nimmt. Dies ist in aller Regel, insbesondere bei Wurstfüllmaschinen, ohne größere Bedeutung, da hier die Abweichungen kaum jemals augenblicklich, sondern erst durch langsame Änderung des Betriebszustandes erfolgen, etwa durch Änderungen der Temperatur, der Beschaffenheit der zu portionierenden Masse, der Abnutzung eines Maschinenteiles oder dergleichen. Um mögliche Meßungenauigkeiten auszuschließen, kann es auch angebracht sein, eine Änderung der Ausstoßbewegung erst dann vorzunehmen, wenn bei mehreren aufeinanderfolgenden Portionen eine bestimmte, gleiche Abweichung festgestellt wird.

Es ist zweckmäßig, daß die Bewegungen an einem dem ausgestoßenen Volumen proportionalen Parameter gemessen werden. Dieser Parameter kann ein Drehwinkel oder der Verschiebeweg eines Portionierelementes sein oder auch eine einem solchen Wert porportionale Größe.

Bei einer zur Durchführung des Verfahrens geeigneten Anordnung zum Portionieren einer fließfähigen Masse mit einem schrittweise beweglichen Portionierelement, dessen Ausstoßbewegung nach einem Sollwert einstellbar ist, mit einer Meßeinrichtung zum ständigen Messen der Ausstoßbewegungen, mit einer Vergleichsanordnung zum ständigen Vergleichen von Sollwert und Istwert und mit Steuermitteln zum Beenden der Ausstoßbewegungen und Einleiten der jeweils folgenden Ausstoßbewegung bei Erreichen eines bestimmten Istwertes, wobei nach Beendigung der Ausstoßbewegungen ein Nachlauf auftritt, wird die der Erfindung zugrundeliegende Aufgabe gelöst durch Mittel zur Messung des Nachlaufs, zur Bildung der Differenz zwischen dem Sollwert für den folgenden Ausstoßvorgang und dem bereits gemessenen Nachlauf und zum Abschalten der Ausstoßbewegung bei Erreichen der gebildeten Differenz.

In Weiterbildung dieser Anordnung ist vorgesehen, daß die Vergleichsanordnung mit Steuermitteln verbunden ist zum Zurückstellen der Meßeinrichtung auf den Anfangswert für einen neuen Ausstoßvorgang und zum Beginn eines neuen Meßvorgangs, sobald bei dem vorhergehenden Ausstoßvorgang Sollwert und Istwert übereinstimmen.

Die Meßeinrichtung kann einen mit dem Portionierelement verbundenen Meßwertgeber, einen diesem zugeordneten Taster und ein durch diesen steuerbares Meßgerät aufweisen, das durch die Vergleichsanordnung mit einer Sollwert-Einstellvorrichtung verbunden ist. Im Prinzip kann hier auch analog gemessen werden, etwa so, daß ein einstellbarer Kondensator in solcher Weise aufgeladen wird, daß seine Spannung der gerade ausgestoßenen Portion proportional ist, wobei nach Erreichen einer Sollwert-Spannung der Abbrems- und Umschaltvorgang ausgelöst wird.

Einfacher und zuverlässiger erscheint jedoch die Ausbildung des Meßwertgebers als Impulsgeber und des Meßgerätes als Digitalzähler, wobei zweckmäßigerweise auch die Sollwert-Einstellvorrichtung digital ausgebildet ist. Dabei ist es unwesentlich, ob der eingestellte Sollwert digital rückwärts oder vorwärts ausgezählt wird. Wesentlich ist jedoch, daß die Umschaltung zuverlässig gewährleistet wird, wenn eine vorgewählte Zahl erreicht ist, die beispielsweise dem Volumen der abgefüllten Portion, gemessen in Kubikzentimetern, entspricht.

Nach einem weiteren Merkmal der Erfindung kann der Meßwertgeber drehbar gelagert und gegenüber dem Portionierelement so übersetzt sein, daß eine Umdrehung des Meßwertgebers einer Volumeneinheit der verdrängten Masse oder dem ganzzahligen Vielfachen einer solchen Volumeneinheit entspricht.

Bei einem hydraulisch angetriebenen Portionierelement muß nicht einmal eine mechanische Antriebsverbindung zum Meßwertgeber bestehen. Der Antrieb läßt sich vielmehr durch eine in den hydraulischen Antriebskreis geschaltete Strömungsmaschine bilden. Diese kann der Antriebs-Hydromotor oder eine mit diesem in geschlossenem Kreislauf arbeitende Pumpe sein, besser aber ein gesonderter, kleiner Hydromotor, der nach Art eines Flüssigkeitszählers lediglich den Meßwertgeber antreibt.

Für die meisten Anwendungsgebiete kommt man mit fest vorgesehenen Übertragungsverbindungen ohne jede Änderungsmöglichkeit aus. Mitunter ist es jedoch vorteilhaft, veränderliche Größen oder unterschiedliche Einheiten wie Volumen, Masse oder Gewicht leicht einstellen zu können. Wenigstens für diesen Fall empfiehlt sich ein zwischen dem Antrieb des Meßwertgebers und der Sollwert-Einstellvorrichtung vorgesehenes Justiermittel zum Anpassen der Einheiten von Istwert und Sollwert. Solche Mittel können auch dann von Vorteil sein, wenn Fertigungsungenauigkeiten oder Verschleißerscheinungen auszugleichen sind.

Die Justiermittel können beispielsweise als Getriebe mit stufenlos veränderlicher Übersetzung im Antrieb des Meßwertgebers oder als zwischen Meßgerät und Sollwert-Einstellvorrichtung vorgesehener elektronischer Wandler ausgebildet sein.

Die Erfindung ist nachstehend an Ausführungsbeispielen erläutert, die in der Zeichnung dargestellt sind.

Es zeigen :

Figur 1 in schematischer Darstellung eine erfindungsgemäß ausgebildete Anordnung zum Portionieren einer Wurstmasse,

Figur 2 ein zugehöriges Blockschaltbild,

Figur 3 ein Winkeldiagramm,

Figur 4 eine Abwandlung der in Fig. 1 gezeigten Anordnung mit regelbarem Hydro-Antriebsmotor und

Figur 5 eine weitere Abwandlung dieser Anordnung mit Abfüllzylinder.

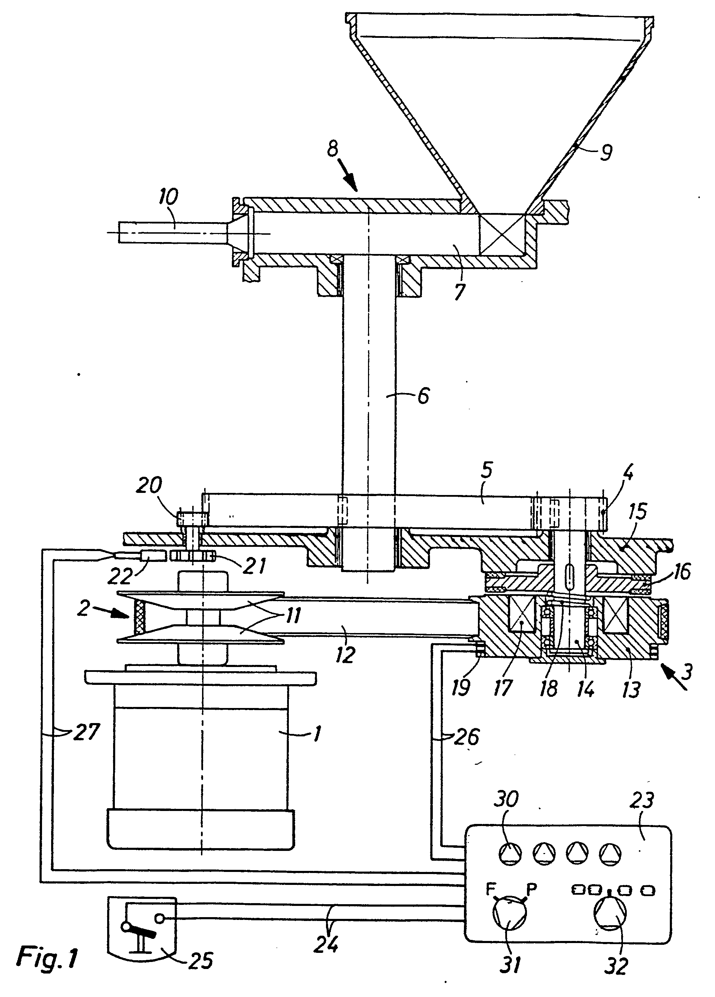

Nach Figur 1 treibt ein als Elektromotor ausgebildeter Antriebsmotor 1 über Regelgetriebe 2, Magnetkupplung 3, Ritzel 4 und Zahnrad 5 eine Pumpenwelle 6 an, die das als Pumpenrad ausgebildete Portionierelement 7 eines Förderwerkes 8 trägt. Dieses Förderwerk ist hier die Füllpumpe einer Wurstfüllmaschine, der das Füllgut aus einem Trichter 9 zugeführt wird und die es durch schrittweise Fortschaltung in Form einzelner Portionen in ein Stopfrohr 10 einfüllt.

Das Regelgetriebe 2 umfaßt zwei Kegelscheiben 11, die zur Änderung des Übersetzungsverhältnisses axial gegeneinander verstellbar sind und über einen Keilriemen 12 eine Antriebsscheibe 13 der Magnetkupplung 3 antreiben. Diese Antriebsscheibe sitzt mittels Kugellager drehbar auf einer das Ritzel 4 tragenden Welle 14. Zwischen der Antriebsscheibe 13 und einem Gehäu-

seteil 15 sitzt drehschlüssig, aber längsverschiebbar auf der Welle 14 eine Kupplungsscheibe 16, die als Anker für eine in der Antriebsscheibe 13 eingelassene Magnetwicklung 17 dient und durch eine auf der Welle 14 angebrachte Schraubenfeder 18 gegen das Gehäuseteil 15 gedrückt wird. Bei stromloser Magnetkupplung ist die Kupplungsscheibe 16 und damit das Portionierelement 7 (Pumpenrad) des Förderwerkes 8 kraftschlüssig am Gehäuseteil 15 festgelegt. Wird jedoch die Magnetwicklung 17 über die Schleifringe 19 an Spannung gelegt, so wird die Kupplungsscheibe 16 durch magnetischen Kraftschluß an die Antriebsscheibe 13 angezogen und dadurch das Förderwerk 8 während der Einschaltdauer der Magnetwicklung mit dem Antrieb gekuppelt.

In das Zahnrad 5 greift ein Ritzel 20, das im Gehäuseteil 15 drehbar gelagert und fest mit einem scheibenförmigen Meßwertgeber 21 verbunden ist, an dessen Umfang ein Taster 22 heranragt. Der Meßwertgeber 21 hat an seinem Umfang zehn unter gleichen Zwischenabständen angebrachte Zähne, bei deren Durchgang am Taster 22 jeweils über die Leitungen 27 ein Impuls einem Steuergerät 23 übermittelt wird, das durch Leitungen 24 mit einem beispielsweise als Kniehebelschalter ausgebildeten Schalter 25 und durch Leitungen 26 mit den Schleifringen 19 der Magnetkupplung 3 verbunden ist. Das Steuergerät 23 umfaßt einer Sollwert-Einstellvorrichtung 30 mit Einstellknöpfen für vier Dekaden, einen Funktionseinsteller 31 mit den Einstellungen F = Füllen und P = Portionieren und einen Pauseneinsteller 32 zum Einstellen der Pausenzeit zwischen zwei Ausstoßvorgängen.

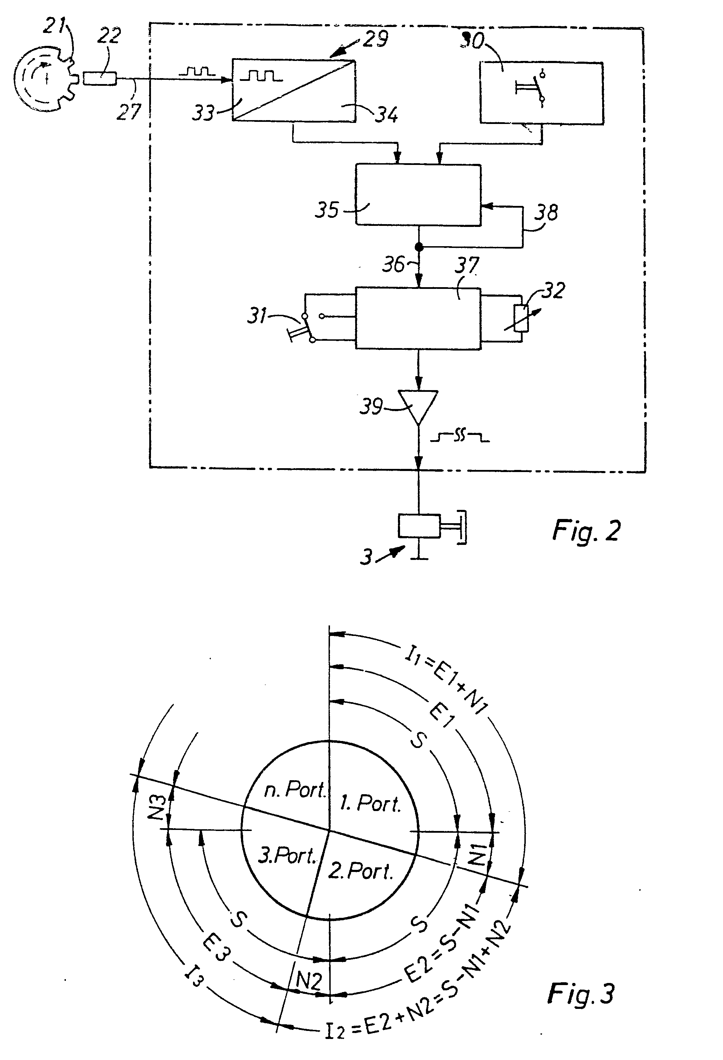

Als Meßgerät 29 dient ein 4-stelliger Digitalzähler (Fig. 2), der die über die Leitungen 27 eingehenden, vom Meßwertgeber 21 ausgesandten Signale und damit zunächst die Anzahl der Umdrehungen des Meßwertgebers zählt. Die Übersetzung des Meßwertgebers 21 zum Portionierelement 7 ist derart ausgebildet, daß jeder aus dem Stopfrohr 10 augestoßenen Volumeneinheit cm$^3$ Füllmasse eine Zehntel-Umdrehung des Meßwertgebers 21 entspricht und dadurch jede Förderung eines cm$^3$ eine Impulsabgabe für das Meßgerät 29 (Digitalzähler) auslöst.

Es versteht sich, daß man eine andere Bezugseinheit oder Übersetzung wählen, dem Meßwertgeber 21 eine andere, etwa eine Trommelform, geben und ihn mit mehreren am Umfang gleichmäßig verteilten Dauermagneten oder anderen, Signale aussendenden Elementen versehen kann.

Wie Fig. 2 erkennen läßt, hat das Meßgerät 29 eine Binärstufe 33 und eine Dezimalstufe 34. Die Dezimalstufe ist ebenso wie die dezimale Einstellvorrichtung 30 für den Sollwert an eine Vergleichsanordnung 35 angeschlossen, die bei Erreichen des eingestellten Sollwertes durch das den Istwert zählende Meßgerät 29 über eine Leitung 36 eine Programmsteuerung 37 in Gang setzt und über Steuermittel 38 den Zähler des Meßgerätes 29 zurückstellt und zum Zählen bzw. Messen der nächsten Portion umschaltet. Über einen Verstärker 39 werden dabei die Magnetkupplung 3 und somit das Portionierelement 7 abgeschaltet bzw. abgebremst, und nach Ablauf der durch den Pauseneinsteller 32 vorgegebenen Pausenzeit wird ein Einschaltkommando an die Magnetkupplung 3 übermittelt und dadurch effektiv ein neuer Portioniervorgang begonnen.

Nun wird über die Steuermittel 38 nicht nur die Rückstellung des Zählers gesteuert, sondern gleichzeitig ein neuer Zählvorgang eingeleitet, während erst von der Programmsteuerung 37 über den Verstärker 39 verzögert die Abschaltung der Magnetkupplung 3 bewirkt wird, was schon eine elektrische Verzögerung zur Folge hat, an die sich eine Bremszeit anschließt. Während aller dieser Zeiten läuft das Portionierelement 7 noch eine bestimmte Strecke weiter, fördert also Masse, die schon für die nächste Portion gezählt wird. Zu der in der Einschaltzeit geförderten Masse wird also anstelle des anschließenden Nachlaufs der Nachlauf der vorhergehenden Portion gezählt.

Im Winkeldiagramm der Fig. 3 ist davon ausgegangen, daß jeder Winkelgrad — beispielsweise bezogen auf den Drehwinkel des Portionierelementes 7 — einem cm$^3$ ausgestoßener Masse entspricht. Jede Portion soll mit 90 cm$^3$ abgefüllt werden. Dabei ist der Sollwert S = 90° = 90 cm$^3$ vorgegeben.

Die erste Portion wird ohne jede Korrektur ausgeführt, d.h. mit dem Anlauf des Portionierelementes 7 beginnt der Zähler des Meßgerätes 29 bis E1 = S = 90 zu zählen. Am Ende dieses Vorganges wird ein neuer Zählvorgang für die zweite Portion eingeleitet. Das Portionierelement 7 läuft aber noch aus und fördert im Nachlaufwinkel N1 = 10° weiter. Insgesamt wird also eine Istportion I1 = E1 + N1 = S + N1 ausgestoßen.

Da für die nächste Portion schon 10° = N1 angezählt sind, wird dort nach

$$E2 = S - N1 = 80° = 80 \, cm^3$$

abgeschaltet. Der Nachfüllvorgang erstreckt sich noch auf N2. Damit ergibt sich die zweite Portion aus

$$I2 = E2 + N2 = S - N1 + N2.$$

Diese Gleichung läßt erkennen, daß schon I2 dann mit dem Sollwert S übereinstimmt, wenn die beiden Nachlaufgrößen N1 und N2 gleich sind. Das ist dann der Fall, wenn am Ende der ersten Portion schon die Endgeschwindigkeit erzielt ist.

In der Praxis kann jedenfalls davon ausgegangen werden, daß N2 schon um weniger als 20 % von N1 abweicht, d.h. um weniger als 2 cm$^3$ = 2,2 % S. Vergleichbar sind auch die maximalen Abweichungen, falls während des Betriebes die Geschwindigkeit geändert wird. Da solche Abweichungen jedenfalls bei Wurstabfüllmaschinen eindeutig innerhalb der Toleranzgrenzen liegen, genügt es dort, lediglich die erste Portion beim Anlaufvorgang auszuscheiden.

Voraussetzung für diese Steuerungsgenauigkeit ist selbstverständlich, daß jeder Impuls der gewählten Mengeneinheit entspricht. Wenn dies nicht ohne weiteres zutrifft oder mit anderen Meßeinheiten gearbeitet werden soll, kann irgendeine Justiermöglichkeit zwischen dem Antrieb des Portionierelementes und der Sollwert-Einstellvorrichtung vorgesehen sein. Beispielsweise kann man dem Meßwertgeber 21 ein Getriebe mit stufenlos einstellbarer Geschwindigkeit vorschalten oder den Ist-Sollwertvergleich in der Vergleichsanordnung 35 mit einem von 1 : 1 abweichenden, einstellbaren Verhältnis ausführen.

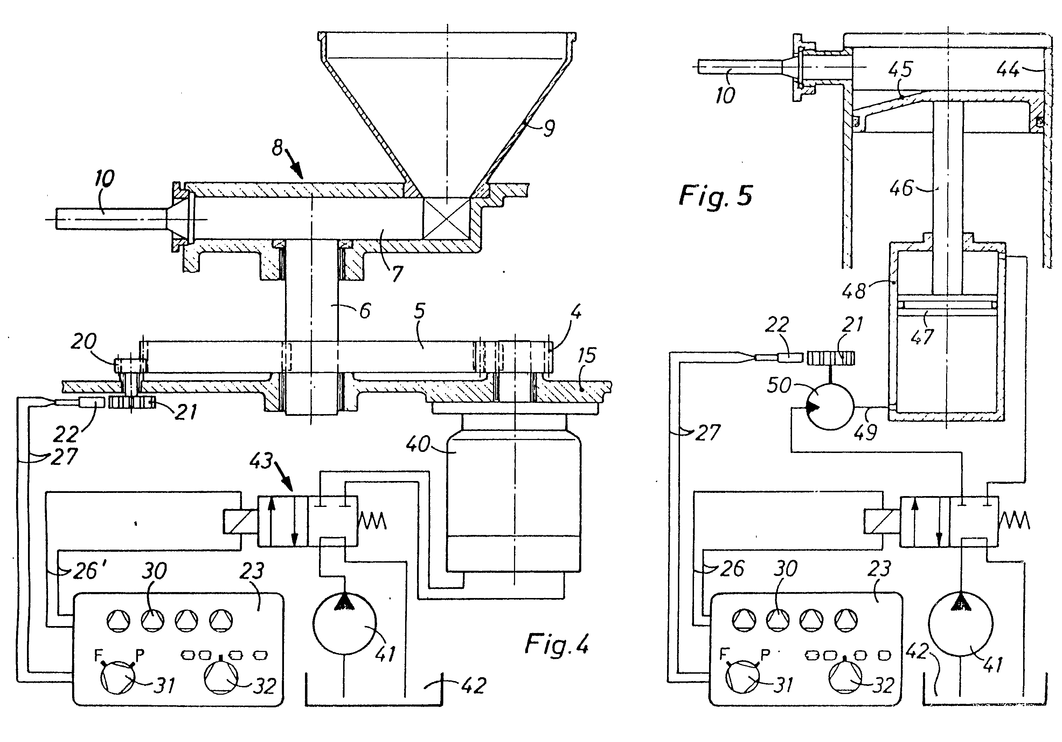

Bei der Ausführung der Fig. 4 sitzt das Ritzel 4 unmittelbar an einem Hydromotor 40, der durch eine Pumpe 41 aus dem Ölbehälter 42 gespeist und durch ein Magnet-Schieberventil 43 über die Leitungen 26' gesteuert wird ; anstelle eines Schieberventils können auch Tellerventile oder andere Steuerelemente eingesetzt werden.

Eine weitere Möglichkeit zeigt Fig. 5. Dort wird das Stopfrohr 10 aus einem Brätzylinder 44 durch ein als Brätkolben ausgebildetes Portionselement 45 gespeist, das durch eine Kolbenstange 46 mit einem Hydraulikkolben 47 in einem Hydraulikzylinder 48 fest verbunden ist. Dabei wird die Kolbenanordnung schrittweise in der gleichen Weise vorgeschoben, wie der Hydraulikmotor 40 aus Fig. 4 gedreht wird. Auch dabei ist es grundsätzlich möglich, einen Meßwertgeber beispielsweise unmittelbar durch das Portionierelement 45 anzutreiben. Da dort jedoch die Verstellgröße zu klein ist, wurde in die von der Pumpe 41 kommende Druckleitung 49 ein kleiner Hydromotor 50 zum Antrieb des Meßwertgebers 21 eingeschaltet.

Die dargestellten Ausführungen sind vornehmlich auf eine möglichst einfache Steueranordnung abgestellt. Im Vergleich zu der erzielten Reaktionsgeschwindigkeit wird eine außergewöhnlich große Portioniergenauigkeit erzielt, die bei gleichbleibender Geschwindigkeit und den üblicherweise langsam auftretenden Betriebsänderungen in der Größenordnung einer einzigen Meßeinheit wie 1 cm³ liegt. Sollte dies nicht genügen, kann man eine kleinere Meßeinheit einsetzen oder auch weitere Meßwerte für eine zusätzliche Steuerung heranziehen.

Bei der Nachlaufkompensation gemäß der Erfindung muß immer gewährleistet sein, daß die gemessenen Werte mit den tatsächlich portionierten Größen übereinstimmen, d.h., daß die Übersetzungen stimmen oder die Anordnung zuverlässig geeicht und einjustiert ist. Würde beispielsweise die für einen Sollwert von 100 cm³ eingestellte erste Portion einen Wert von 110 cm³ erreichen, so würde bei 100 cm³ bereits mit der Messung der folgenden Portion begonnen. Da der Nachlauf von 10 cm³ der ersten Portion bei der zweiten mitgezählt wird, ist diese auch tatsächlich nach 100 cm³ abgeschlossen, sofern die äußeren Bedingungen konstant bleiben. Wenn man alle Portionen ganz exakt bemessen will, genügt es, lediglich die erste Portion leer ablaufen zu lassen, abzuzweigen bzw. nicht weiter zu verwerten. Bei der zweiten Portion beginnt man schon mit 110 zu zählen bzw. weiterzuzählen, wenn die erste Volumeneinheit eingefüllt wird. Wenn bis 100 gezählt ist und umgeschaltet wird, ist erst bis 90 eingefüllt. Mit konstantem Nachlauf von 10 cm³ wird die Portion nach der Umschaltung auf 100 Einheiten vervollständigt. Bei Taktzahlen von beispielsweise 300/min. werden in einer einzigen Sekunde bereits 5 Korrekturen durchgeführt. Die in 0,2 Sek. auftretenden Änderungen liegen, da z.B. bei Wurstfüllmaschinen Änderungen nur in einer größeren Zeitspanne eintreten können, in aller Regel zuverlässig innerhalb der Portionstoleranzen.

**Ansprüche**

1. Verfahren zum Portionieren einer plastisch verformbaren Masse, insbesondere Wurstmasse, bei dem man die einzelnen Portionen nach einem eingestellten Sollwert schrittweise ausstößt und die Ausstoßbewegung laufend mißt, wobei nach jedem Ausstoßvorgang ein Nachlauf auftritt, dadurch gekennzeichnet, daß man

a) nach Beendigung der Ausstoßbewegung den diesem folgenden Nachlauf mißt

b) für den darauffolgenden Ausstoßvorgang die Differenz zwischen dem Sollwert und diesem Nachlauf bildet

c) die Ausstoßbewegung abschaltet, sobald diese Differenz erreicht ist.

2. Verfahren nach Anspruch 1, dadurch gekennzeichnet, daß die Bewegungen an einem dem ausgestoßenen Volumen proportionalen Parameter gemessen werden.

3. Anordnung zum Portionieren einer plastisch verformbaren Masse, insbesondere Wurstmasse, mit einem schrittweise beweglichen Portionierelement, dessen Ausstoßbewegung nach einem Sollwert einstellbar ist, mit einer Meßeinrichtung zum ständigen Messen der Ausstoßbewegungen, mit einer Vergleichsanordnung zum ständigen Vergleichen von Sollwert und Istwert und mit Steuermitteln zum Beenden der Ausstoßbewegungen und Einleiten der jeweils folgenden Ausstoßbewegung bei Erreichen eines bestimmten Istwertes, wobei nach Beendigung der Ausstoßbewegungen ein Nachlauf auftritt, insbesondere zur Durchführung des Verfahrens nach Anspruch 1 oder 2, gekennzeichnet durch Mittel zur Messung des Nachlaufs, zur Bildung der Differenz zwischen dem Sollwert für den folgenden Ausstoßvorgang und dem bereits gemessenen Nachlauf und zum Abschalten der Ausstoßbewegung bei Erreichen der gebildeten Differenz.

4. Anordnung nach Anspruch 3, dadurch gekennzeichnet, daß die Vergleichsanordnung (35) mit Steuermitteln (38) verbunden ist zum Zurückstellen der Meßeinrichtung auf den Anfangswert für einen neuen Ausstoßvorgang und zum Beginn eines neuen Meßvorgangs, sobald bei dem vor-

hergehenden Ausstoßvorgang Sollwert und Ist-wert übereinstimmen.

5. Anordnung nach Anspruch 3 oder 4, dadurch gekennzeichnet, daß die Meßeinrichtung einen mit dem Portionierelement (7) verbundenen Meßwertgeber (21), einen diesem zugeordneten Taster (22) und ein durch diesen steuerbares Meßgerät (29) aufweist, das durch die Vergleichsanordnung (35) mit einer Sollwert-Einstellvorrichtung (30) verbunden ist.

6. Anordnung nach Anspruch 5, dadurch gekennzeichnet, daß als Meßwertgeber (21) ein Impulsgeber vorgesehen und das Meßgerät (29) durch einen Digitalzähler gebildet ist.

7. Anordnung nach Anspruch 5 oder 6, dadurch gekennzeichnet, daß der Meßwertgeber (21) drehbar gelagert und gegenüber dem Portionierelement (7) so übersetzt ist, daß eine Umdrehung des Meßwertgebers (21) einer Volumeneinheit der verdrängten Masse oder dem ganzzahligen Vielfachen einer solchen Volumeneinheit entspricht.

8. Anordnung nach Anspruch 5 oder 6, dadurch gekennzeichnet, daß bei hydraulisch angetriebenem Portionierelement (45) der Meßwertgeber (21) mit einer in den hydraulischen Antriebskreis geschalteten Strömungsmaschine, insbesondere einem gesonderten Hydromotor (50), in Antriebsverbindung ist.

9. Anordnung nach einem der Ansprüche 3 bis 8, gekennzeichnet durch ein zwischen dem Antrieb des Meßwertgebers (21) und der Sollwert-Einstellvorrichtung (30) vorgesehenes Justiermittel zum Anpassen der Einheiten von Istwert und Sollwert.

10. Anordnung nach Anspruch 9, dadurch gekennzeichnet, daß die Justiermittel durch ein Getriebe mit stufenlos veränderlicher Übersetzung im Antrieb des Meßwertgebers (21) gebildet sind.

11. Anordnung nach Anspruch 9, dadurch gekennzeichnet, daß die Justiermittel als zwischen Meßgerät (29) und Sollwert-Einstellvorrichtung (30) vorgesehener elektronischer Wandler ausgebildet sind.

## Claims

1. Process for the portioning of a plastically deformable mass in particular sausage mass in which the individual portions are extruded stepwise according to a predetermined nominal value and the extrusion motion is continuously measured, after each extrusion process an overrun occurring, characterised in that

a) after completion of the extrusion motion the resultant overrun is measured

b) for the subsequent extrusion process the difference between the nominal value and this overrun is determined

c) the extrusion motion is terminated, as soon as this difference is achieved.

2. Process according to Claim 1, characterised in this that the motions are measured by a parameter proportional to the extruded volumes.

3. Arrangement for the portioning of a plastically deformable mass, in particular a sausage mass, with a portioning element movable in steps, of which the extrusion motion is adjustable in accordance with a nominal value, with a measuring device for continuously measuring the extrusion motions, with a comparator arrangement for the continuous comparison of the nominal value and the actual value and with control means for the termination of the extrusion motions and initiation of the respective following extrusion motion on achieving a pre-determined actual value, after termination of the extrusion motions an overrun occurring in particular for carrying out the process according to Claim 1 or 2 characterised by, means for the measurement of the overrun, for the determination of the difference between the nominal value for the subsequent extrusion process and the already measured overrun and for termination of the extrusion motion on achieving the determined difference.

4. Arrangement according to Claim 3, characterised in that the comparator arrangement (35) is connected with the control means (38) for the resetting of the measuring device to the initial value for a fresh extrusion process and for the commencement of a fresh measuring process, as soon as there is agreement between the preceding extrusion process nominal value and the actual value.

5. Arrangement according to Claim 3 or 4, characterised in that the measuring device has a measured value transmitter (21) connected with the portioning element (7), a sensor (22) associated with this and a measuring apparatus (29) controllable thereby, which by this comparator arrangement (35) is connected with a nominal value adjustement device (30).

6. Arrangement according to Claim 5 characterised in this that there is provided as a measured value transmitter (21) a pulse generator and the measuring apparatus (29) is formed by a digital counter.

7. Arrangement according to Claim 5 or 6 characterised in that the measured value transmitter (21) is rotatably mounted and is so geared in relation to the portioning element (7) that one revolution of the measured value transmitter (21) corresponds to a unit volume of the expressed mass or to the whole number multiple of such a unit volume.

8. Arrangement according to Claim 5 or 6, characterised in that with hydraulically driven proportioning element (45) the measured value transmitter (21) is in driving connection with a fluid flow machine deposed in the hydraulic drive circuit, in particular with a separate hydraulic motor (50).

9. Arrangement according to one of Claims 3 to 8, characterised by a calibrating means provided between the drive of the measured value transmitter (21) and the nominal value adjustment device (30) for the matching of the units of the actual value and the nominal value.

10. Arrangement according to Claim 9, characterised in that the calibrating means are formed by a drive with steplessly variable transmission within the drive transmission of the measured value transmitter (21).

11. Arrangement according to Claim 9, characterised in that the calibrating means are constructed as an electronic converter interposed between the measuring apparatus (29) and the nominal value adjustment device (30).

## Revendications

1. Procédé pour diviser en portions une matière plastiquement déformable, en particulier de la chair à saucisse, dans lequel les portions sont individuellement expulsées pas à pas conformément à une valeur nominale réglée et le mouvement d'expulsion est mesuré constamment, une amenée de matière supplémentaire se produisant après chaque processus d'expulsion, caractérisé en ce que :

a) après achèvement du mouvement d'expulsion la matière supplémentaire amenée à la suite de celui-ci est mesurée ;

b) pour le processus d'expulsion suivant la différence entre la valeur nominale et ce supplément de matière est établie ; et

c) le mouvement d'expulsion est arrêté aussitôt que cette différence est atteinte.

2. Procédé selon la revendication 1, caractérisé en ce que les mouvements sont mesurés en se référant à un paramètre proportionnel au volume expulsé.

3. Dispositif destiné à diviser en portions une matière plastiquement déformable, en particulier de la chair à saucisse, et comprenant un organe de formation de portions susceptible de se déplacer pas à pas et dont le mouvement d'expulsion est réglable en fonction d'une valeur nominale, un équipement de mesure pour mesurer constamment les mouvements d'expulsion, un comparateur pour comparer constamment la valeur nominale et la valeur effective ainsi que des organes de commande pour mettre un terme aux mouvements d'expulsion et déclencher chaque fois le mouvement d'expulsion suivant lorsqu'une valeur effective déterminée est atteinte, une amenée de matière supplémentaire se produisant après achèvement des mouvements d'expulsion, le dispositif étant prévu notamment pour la mise en œuvre du procédé selon les revendications 1 ou 2, caractérisé en ce qu'il comprend des moyens pour mesurer le supplément de matière amenée subséquemment, pour établir la différence entre la valeur nominale pour le processus d'expulsion suivant et ledit supplément de matière déjà mesuré et pour arrêter le mouvement d'expulsion lorsque la différence ainsi établie est atteinte.

4. Dispositif selon la revendication 3, caractérisé en ce que le comparateur (35) est connecté à des organes de commande (38) pour ramener l'équipement de mesure à la valeur initiale pour un nouveau processus d'expulsion et pour faire démarrer un nouveau processus de mesure aussitôt que lors du processus d'expulsion précédent la valeur nominale et la valeur effective concordent.

5. Dispositif selon la revendication 3 ou 4, caractérisé en ce que l'équipement de mesure comporte un capteur (21) relié à l'organe de formation de portions (7), un détecteur (22) associé au capteur (21) et un appareil de mesure (29) susceptible d'être commandé par le détecteur (22) et relié par l'intermédiaire du comparateur (35) à un dispositif de réglage de valeur nominale (30).

6. Dispositif selon la revendication 5, caractérisé en ce qu'il est prévu en tant que capteur (21) un générateur d'impulsions et en ce que l'appareil de mesure (29) est constitué par un compteur numérique.

7. Dispositif selon la revendication 5 ou 6, caractérisé en ce que le capteur (21) est monté tournant et en ce que le rapport de transmission entre le capteur (21) et l'organe de formation de portions (7) est tel qu'un tour de rotation du capteur (21) correspond à une unité de volume de la matière refoulée ou à un nombre entier de fois une telle unité de volume.

8. Dispositif selon la revendication 5 ou 6, caractérisé en ce que dans le cas d'un organe de formation de portions à commande hydraulique (45) le capteur (21) est entraîné par une turbomachine, en particulier un moteur hydraulique séparé (50), montée dans le circuit de commande hydraulique.

9. Dispositif selon l'une quelconque des revendications 3 à 8, caractérisé en ce qu'il comprend un organe d'ajustage prévu entre la commande du capteur (21) et le dispositif de réglage de valeur nominale (30) pour adapter les unités de valeur effective et de valeur nominale l'une à l'autre.

10. Dispositif selon la revendication 9, caractérisé en ce que l'organe d'ajustage est constitué par un mécanisme de transmission à rapport de transmission infiniment variable prévu dans la commande du capteur (21).

11. Dispositif selon la revendication 9, caractérisé en ce que l'organe d'ajustage est réalisé en tant que transducteur électronique prévu entre l'appareil de mesure (29) et le dispositif de réglage de valeur nominale (30).

**Fig.1**

Fig. 2

Fig.3

$I_1 = E1 + N1$

E1

S

$I_2 = E2 + N2 = S - N1 + N2$

$E2 = S - N1$

$E3$

$I_3$

S

1. Port.

2. Port.

3.Port.

n. Port.

N1

N2

N3

Fig. 5

Fig.4

0 0 1 3 5 5 2